Europäisches Patentamt

European Patent Office

Office européen des brevets

(19)

(11) Publication number: **0 319 109**
**A1**

(12) **EUROPEAN PATENT APPLICATION**

(21) Application number: **88202742.8**

(22) Date of filing: **30.11.88**

(51) Int. Cl.⁴: **H04N 7/00**

(30) Priority: **03.12.87 NL 8702916**

(43) Date of publication of application:
**07.06.89 Bulletin 89/23**

(84) Designated Contracting States:
**AT BE CH DE ES FR GB IT LI NL SE**

(71) Applicant: **N.V. Philips' Gloeilampenfabrieken**
**Groenewoudseweg 1**
**NL-5621 BA Eindhoven(NL)**

(72) Inventor: **Ruitenburg, Leonardus Joseph**
**Michael**
**c/o INT. OCTROOIBUREAU B.V. Prof.**
**Holstlaan 6**
**NL-5656 AA Eindhoven(NL)**

(74) Representative: **Schoonheijm, Harry Barend et**
**al**
**INTERNATIONAAL OCTROOIBUREAU B.V.**
**Prof.Holstlaan 6**
**NL-5656 AA Eindhoven(NL)**

(54) **TV broadcasting system for the transmission of a time-division multiplex television signal.**

(57) TV broadcasting system for the transmission of a time-division multiplex television signal discrete lines of which successively comprise first, second and third sections incorporating a digital sound/data component having a bit rate of 10.125 Mbit/sec, a time-compressed chrominance component and a time-compressed luminance component, respectively. Such a time-division multiplex television signal, for example, the D2-MAC TV signal has a basebandwidth which is generally larger than the channel basebandwidth of conventional transmission media such as, for example, the existing CATV cable distribution networks and has the property that transmission through such narrow-band transmission media does not result in a loss of essential information. In order to increase the transmission capacity while maintaining this so-called transparency property, the said time-division multiplex television signal according to the invention comprises a further signal component which is incorporated in the first section and which constitutes, together with the digital sound/data component, a frequency-division multiplex signal having a bandwidth which is at most equal to that of the said two time-compressed components.

FIG.2

## TV Broadcasting system for the transmission of a time-division multiplex television signal.

The invention relates to a TV broadcasting system for the transmission of a time-division multiplex television signal discrete lines of which successively comprise first, second and third sections incorporating a digital sound/data component having a bit rate of 10.125 Mbit/sec, a time-compressed chrominance component and a time-compressed luminance component, respectively. The invention also relates to a TV receiver suitable for the reception of the TV broadcasting signal of this system.

A time-division multiplex television signal complying with the above-mentioned description is, for example, the D2-MAC TV signal as defined in the document "Spécification du Système D2-MAC/Paquet" published by the French "Premier Ministre Sécretariat d'Etat chargé des Techniques de la Communication" in September 1985.

For obtaining a sufficiently high resolution and dependent on the compression factor of the time-compressed chrominance and luminance components, the known time-division multiplex television signal has a basebandwidth which is considerably larger than the basebandwidth of conventional, for example PAL, SECAM or NTSC TV signals. This has been taken into account in the choice of the inter channel distance in the frequency spectrum transmitted by satellites. Also in dependence upon the form of modulation, selectivity requirements, etc., this inter channel distance determines the channel basebandwidth of the TV broadcasting system which indicates the maximum bandwidth of the baseband signal, hereinafter briefly referred to as channel width, which can be transmitted in each satellite channel. The channel width of existing transmission media such as, for example, conventional cable television networks is, however, generally much smaller than that in the satellite transmission path and is, for example, limited to the order of magnitude of the basebandwidth of the last-mentioned conventional TV signals. Nevertheless a transmission of the known time-division multiplex television signal through such a comparatively narrow-band channel width does not result in a loss of data information, because the signal energy of the digital sound/data component at the said value of the bit rate is mainly located within the last-mentioned channel width, whilst suppression of the time-compressed luminance component in the frequency range outside this channel width only causes an acceptable loss of picture definition. A D2-MAC TV signal transmitted as a frequency modulation signal by a TV satellite via a wideband satellite channel may therefore be entirely amplitude-remodulated on a suitable carrier after reception and demodulation to the baseband so as to be distributed over conventional cable television networks without demultiplexing and remultiplexing each signal component so that not only novel wideband transmission media but also conventional transmission media having a more limited bandwidth as well as combinations of these media are transparent to the known time-division multiplex television signal.

However, this signal transparency has been at the expense of the channel capacity. In fact, in previously proposed time-division multiplex television signals such as, for example, the so-called C and D MAC TV signals which are specified inter alia in EBU publication Tech. 3258-E "Specification of the systems for the MAC/Packet family" of October 1986, a bit rate of 20.25 Mbit/sec is prescribed for the sound/data component so that it can comprise twice as much information within a channel width of 10.125 MHz than the digital sound/data component of the first-mentioned time-division multiplex TV signal. However, such a high bit rate makes it impossible to transmit signals through existing conventional transmission media without a loss of essential information.

It is an object of the invention to increase the transmission capacity of the TV broadcasting system of the type described in the opening paragraph while maintaining the said signal transparency, and to provide a TV receiver which is suitable for receiving the TV broadcasting signal in this system.

According to the invention such a TV broadcasting system is characterized by a further signal component which is incorporated in the first section and which constitutes, together with the digital sound/data component, a frequency-division multiplex signal having a basebandwidth which is at most equal to the channel basebandwidth of the TV broadcasting system.

The invention utilizes the fact that the frequency range of the sound/data component is considerably smaller than the channel width available for the transmission of this component. It is based on the recognition that the overall available channel width can be used to an optimum extent while maintaining signal transparency by introducing an additional sub-channel which is incorporated in the first section in frequency-division multiplex with the sound/data component.

When using the measure according to the invention, the transmission capacity of the TV broadcasting system of the type described in the opening paragraph is increased with the further signal component. Simultaneously, the envisaged signal transparency is obtained because the original sound/data component remains intact in the case of a suppression of this further signal component, for example, as a result of a narrow-band distribution through conventional cable television networks after a possible FM/AM conversion, and the bandwidth-limited time-division multiplex television signal is compatible with the known time-division multiplex television signal.

A TV receiver which is suitable for receiving the time-division multiplex television signal of the TV broadcasting system according to the invention is characterized by a frequency-division demultiplexing device for frequency-division demultiplexing the sound/data component and the further signal component incorporated in the first section of the time-division multiplex television signal.

Such a TV broadcasting system is preferably characterized in that the further signal component is amplitude-modulated with a suppressed subcarrier at a subcarrier frequency which at most corresponds to the highest frequency within the channel baseband of the TV broadcasting system, the transmission characteristic of the TV broadcasting system having a low-pass Nyquist edge at this subcarrier frequency.

When using this measure, the available channel capacity is utilized to an optimum extent, whilst foldover is prevented when the further signal component is demodulated.

In order to frequency-division multiplex the further signal component at the transmitter end and to frequency-division demultiplex this component at the receiver end in a simple manner, this further signal component is modulated at a subcarrier frequency which is in a fixed ratio to the clock frequency of the digital sound/data component and a TV receiver according to the invention is characterized by a subcarrier frequency regeneration device to which the clock frequency of the sound/data component is applied for deriving a local subcarrier frequency therefrom and which is coupled to the said frequency-division demultiplexing device.

In a further preferred embodiment the last-mentioned TV broadcasting system is characterized in that the further signal component comprises digital information.

In order to keep the influence of the amplitude decay at the location of the Nyquist edge on the signal-to-noise ratio of the received further signal components as small as possible, this Nyquist edge is realised in the TV receiver which is characterized by a low-pass Nyquist filter preceding this time-division demultiplexing device and having a Nyquist point which is located at the said subcarrier frequency.

The invention will now be described in greater detail, by way of example, with reference to the accompanying drawings in which

Fig. 1 shows a time diagram of a line period of a time-division multiplex television signal in a TV broadcasting system according to the invention;

Fig. 2 shows the baseband frequency spectrum of the frequency-division multiplex signal occurring during the first section of the time-division multiplex television signal;

Fig. 3 is a block-schematic diagram of a TV transmitter for use in a TV broadcasting system according to the invention;

Fig. 4 shows a TV receiver according to the invention which is suitable to co-operate with the TV transmitter of Fig.3.

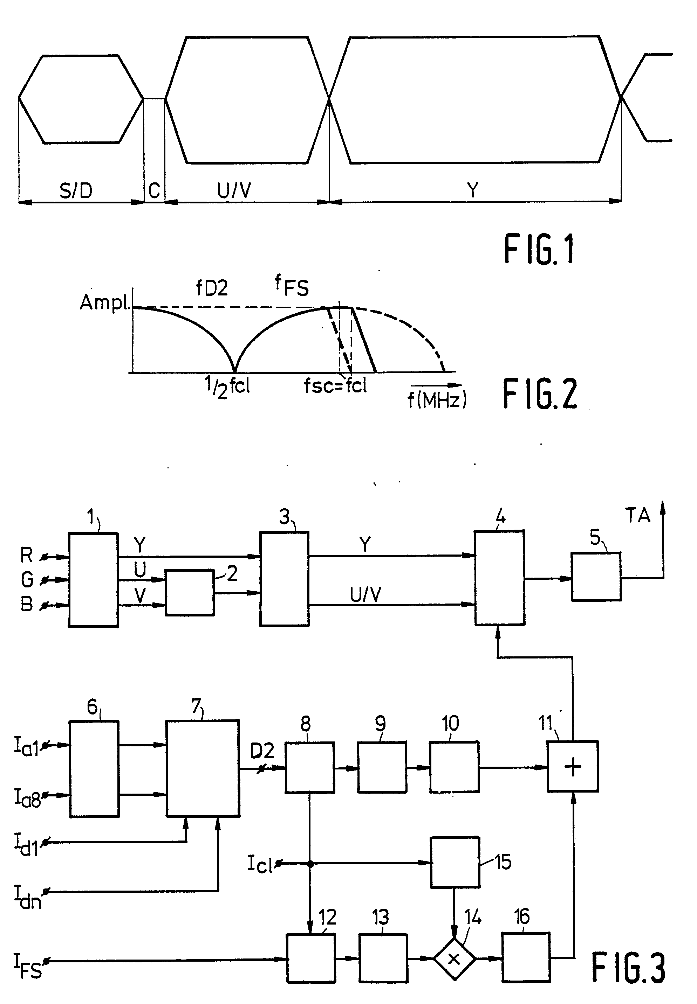

Fig. 1 shows the time diagram of a line period of a time-division multiplex television broadcasting signal according to the invention, which successively incorporates a first section of 11$\mu$sec, a clamping period of 1$\mu$sec, a second section of 17$\mu$sec and a third section of 34$\mu$sec, which sections incorporate a digital sound/data component S/D, a clamping level C, a time-compressed chrominance (chroma) component U/V and a time-compressed luminance component Y, respectively.

The specification of the components mentioned thus far corresponds to that of the D2-MAC TV signal as defined in the above-cited document. For a good understanding of the invention it is sufficient to know that the sound/data component is duobinary encoded and has a bit rate of 10.125 Mbit/sec and the basebandwidth of the time-compressed luminance component may be 8.4 or 10.125 MHz. The basebandwidth of the time-compressed chrominance component is considerably smaller than the lowest values mentioned and is therefore irrelevant for a good understanding of the invention. Transmission through a channel with a basebandwidth of less than 8.4 MHz, for example, approximately 5.5 MHz as in conventional CATV distribution networks only results in a loss of picture definition.

Fig. 2 shows the baseband frequency spectrum of a frequency-division multiplex signal in the first section of the time-division multiplex television signal of a TV broadcasting system according to the invention. Curve $f_{D2}$ shows the variation of the frequency spectrum of the duobinary encoded sound/data component S/D. Due to the said duobinary encoding and the bit rate of 10.125 Mbit/sec, $f_{D2}$ has a cosine-shaped roll-off with a zero at half the clock frequency $1/2\ f_{cl}$ of S/D, that is to say, at approximately 5 MHz.

According to the invention a further signal component FS occurs in the first section in frequency-division multiplex with S/D, whose lower sideband in the case shown is located in the range in which the channel basebandwidth of the TV broadcasting system is larger than that of S/D, that is to say, in the range between $1/2$ $f_{cl}$ and $f_{cl}$ = 10.125 MHz. In practice the channel basebandwidth is chosen to be slightly larger for reasons of selectivity than the last-mentioned value and supplies sufficient space to incorporate the further signal component in a so-called vestigial sideband-modulated form, that is to say, the lower sideband together with a part of the upper sideband, in the frequency-division multiplex signal. The frequency spectrum of FS in the relevant Fig. 2 is indicated by way of example by means of a broken curve $f_{FS}$. It is to be noted that the TV broadcasting system according to the invention may comprise narrow-band transmission media such as, for example, conventional CATV distribution networks, so that signal transmission takes place in wideband and narrow-band channels. The term channel basebandwidth of the TV broadcasting system used in this Application is, however, related to the widest channel in this system, generally that in the satellite path.

In principle, different forms of modulation such as double sideband, vestigial sideband or single sideband amplitude modulation with or without suppressed subcarrier, frequency or phase modulation followed by suitable filtering may be used for such a location of the frequency spectrum of FS. The further signal component is preferably double-amplitude-modulated with a suppressed carrier at a subcarrier frequency $f_{sc}$ in the upper half of the last-mentioned range and this further signal component comprises digital information. The channel capacity is utilised to an optimum extent by choosing $f_{sc}$ to be at the highest limit frequency of the channel baseband, that is to say, at 8.4 or 10.125 MHz (as in Fig. 2) and by giving the channel transmission characteristic a low-pass Nyquist edge at this highest frequency. To this end the frequency spectrum of FS, that is to say, the lower sideband together with a part of the upper sideband determined by the Nyquist filter slope to be used, is to be transmitted in a vestigial sideband mode in frequency-division multiplex with S/D.

Such a modulation may be obtained by means of the transmitter of Fig. 3. This transmitter comprises a picture signal converter 1 to which the primary colour signals R, G and B of a TV picture signal from a video signal source (not shown) are applied via three inputs, which signals are converted into two chrominance components U and V and one luminance component Y. The chrominance components are directly applied to a compression circuit 3 via a digital chroma filter 2 coupled to the picture signal converter 1 and the luminance component Y is directly applied to this compression circuit. In this circuit these components are compressed in such a way that their original basebandwidth of, for example, approximately 1.6 MHz and 5.6 or 6.75 MHz will result into a basebandwidth of approximately 4.8 and 8.4 or 10.125 MHz, respectively. In practice, the compression factor for the U and V components is therefore chosen to have a value of 3 and that for the Y component is chosen to have a value of 3/2 the duration of the compressed U/V and Y components resulting into the afore-mentioned values for the second and third sections, namely 17 and 34μsec. Due to the channel width which is available to a limited extent, the U and V components are alternately transmitted line by line and combined to a single chrominance component U/V. The time-compressed chrominance and luminance components U/V and Y thus obtained are subsequently applied to a time-division multiplexing device 4 which is coupled to the compression circuit 3 and an output of which is connected via a transmitter modulation and output stage 5 to a transmitter antenna TA.

The transmitter shown also comprises an audio-processing section 6 having eight audio inputs $I_{a1}$-$I_{a8}$ to which monophonic and/or stereophonic audio signals are applied. These audio signals are digitized in the audio processing section 6 and are subsequently applied to a sound/data processor 7 coupled to the audio processing section 6, which processor 7 also receives an number of n digital information signals from data inputs $I_{a1}$-$i_{an}$. The sound/data processor 7 forms from the said digital sound and data signals a packet-structured binary sound-data signal S/D which is supplied from an output D2 of the sound/data processor 7. This output is coupled to the time-division multiplexing device 4 via a clock-controlled compression circuit 8 for a compression of S/D to the duration of the said first section, at which the bit rate is 10.125 Mbit/sec, a duobinary encoding circuit 9 for a duobinary encoding of the time-compressed sound/data component S/D, a low-pass filter 10 for a selection of the baseband frequency spectrum $f_{D2}$ of S/D and an adder circuit 11 to be described hereinafter. In this time-division multiplexing device the said U/V, Y and S/D components are formed into the time-division multiplex TV signal as is shown in a time variation in Fig. 1 in which S/D has a frequency spectrum as is shown in Fig. 2 by means of $f_{D2}$. The time-division multiplex television signal described so far corresponds to the D2-MAC TV signal as known from the afore-cited EBU document as far as the S/D component, the time-division multiplex distribution of U/V, Y and S/D and the compression factor are concerned and, as mentioned hereinbefore, it may have a basebandwidth of 8.4 and 10.125 MHz. The channel basebandwidth required for optimum signal transmission should at least be equal thereto. It is to be noted that it may occur under circumstances that a time-division multiplex television signal with a basebandwidth of 8.4 MHz is transmitted through a channel with a basebandwidth of 10.125 MHz. The operation of the circuits described so far does not require any further explanation for a good understanding of the invention.

The transmitter according to the invention also comprises a further clock-controlled compression circuit 12 to which a further signal component FS is applied in a digital form via an input $I_{FS}$. In this circuit the digital further signal component FS is time-compressed in accordance with S/D in the compression circuit 8 such that S/D and FS occur simultaneously during the same period with mutually equal clock frequencies. To this end the compression circuits 8 and 12 are controlled from a common clock input $I_{cl}$. The compression circuit 12 is coupled to a duobinary encoding circuit 13. The operation of this duobinary encoding circuit 13 may correspond to that of the duobinary encoding circuit 9 and is succeeded by a multiplier circuit operating as a modulator 14 in which the duobinary encoded further signal component FS is DSB AM SC modulated at a subcarrier frequency $f_{SC}$. This subcarrier frequency $f_{SC}$ is coupled to the clock frequency $f_{cl}$ of the sound/data component S/D in a frequency generation circuit 15 incorporated between the clock input $I_{cl}$ and the carrier input of the modulator 14, and it may be chosen to be equal to 5/6 $f_{cl}$ (approximately 8.4 MHz) or $f_{cl}$ (10.125 MHz, which is equal to the highest frequency of the channel baseband of the TV broadcasting system). The modulator 14 is coupled to the adder circuit 11 via a suitably chosen bandpass filter 16. The bandpass filter 16 selects a vestigial sideband part of frequency spectrum $f_{FS}$ of the further signal component FS which is added in the adder circuit 11 to the frequency spectrum $f_{D2}$ of S/D, resulting in a frequency-division multiplex signal as is shown in Fig. 2, which occurs periodically during a period corresponding to that of the first section, hereinafter briefly referred to as the S/D, FS-FMX signal. The further time-division multiplex processing of this periodically occurring S/D, FS-FMX signal corresponds to that of the single S/D component in the known D2-MAC TV broadcasting system, that is to say, in the time-division multiplexing device 4 the S/D, FS-FMX signal is incorporated in the said first section, resulting in the time-division multiplex television signal according to the invention. It is to be noted that the filtering at the high side of the S/D, FS-FMX signal may also take place after the time-division multiplexing device 4. The further signal component may be analog or digital.

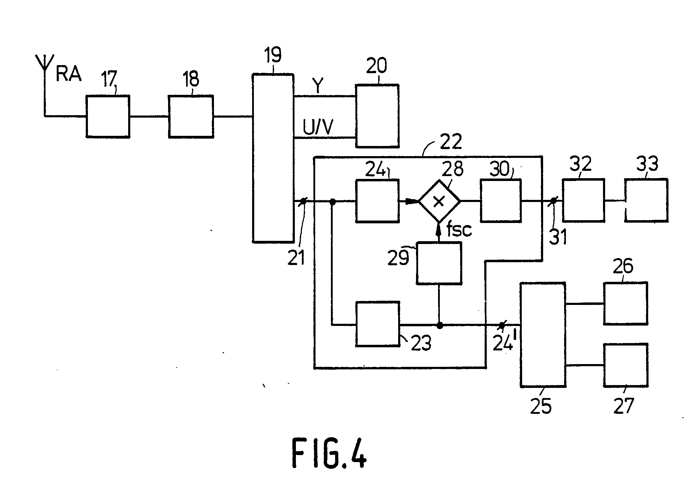

Fig. 4 shows a TV receiver according to the invention, suitable for co-operation with the TV transmitter of Fig. 3. The TV receiver shown has a receiver section 17 in which a desired RF time-division multiplex television signal is selected, demodulated and converted to the baseband. The receiver section 17 is coupled to a time-division demultiplexing device 19 via a low-pass filter 18 which has a Nyquist edge at the said subcarrier frequency $f_{SC}$. The use of a Nyquist edge at $f_{SC}$ prevents possible foldover effects in the further processing of at least the S/D, FS-FMX signal component of the time-division multiplex television signal. This device 19 demultiplexes the time-division multiplex television signal into the original separate components U/V, Y and the said S/D, FS-FMX signal. The picture components U/V are applied to a picture signal processing and display device 20 coupled to the demultiplexing device 19, in which picture signal processing and display device these components are time expanded and further processed and displayed. The operation of the TV receiver circuits described so far does not require any further explanation for a good understanding of the invention. Detailed information can be found, for example, in descriptions of the integrated D2 MAC decoder DMA 2270 of Intermetall.

The time-division demultiplexing device 19 also applies the S/D, FS-FMX signal via a terminal 21 to a frequency-division demultiplexing circuit 22 in which the S/D, FS-FMX signal is demultiplexed in the original sound/data component S/D and the further signal component FS. To this end the frequency-division demultiplexing circuit 22 includes a low-pass filter 23 coupled to the terminal 21 and a bandpass filter 24 for a selection of the frequency spectrum $f_{D2}$ of S/D and the frequency spectrum $f_{FS}$ of FS up to the Nyquist edge of the low-pass filter 18, respectively, from the total frequency spectrum of the S/D, FS-FMX signal. The low-pass filter 23 is coupled via an S/D terminal 24' to an S/D processing unit 25 in which the S/D component is expanded and processed to separate sound and data signals which are further processed and displayed in the sound and data processing circuits 26 and 27, respectively.

The bandpass filter 24 is coupled to a multiplier stage operating as a demodulator 28 for demodulating the $f_{SC}$-modulated FS component to the baseband. A local subcarrier at the frequency $f_{SC}$ is applied to the demodulator 28 from a subcarrier frequency generation circuit 29. This circuit 29 is coupled to an output of the low-pass filter 23 and derives the subcarrier frequency $f_{SC}$ from the clock frequency $f_{cl}$ of the S/D component by means of a suitably chosen multiplication and/or dividing factor. In the case shown in Fig. 2 $f_{SC} = f_{cl}$. The further signal component FS demodulated to the baseband is selected in a low-pass filter 30 coupled to the demodulator 28 and is applied via an FS terminal 31 to an FS processing unit 32 in which the FS component is expanded and converted from a data burst into a continuous data signal if this component is digital and from a signal burst to a time-continuous analog signal if this component is analog. The further signal component, possibly in combination with the sound and/or data information of the said S and D components (not shown), can be displayed in an FS display device 33 coupled to this unit 32.

The operation of the circuits 32 and 33 may correspond to that of the circuits 25 and 26 or 27 embodiments of which are realized in the said integrated decoding circuit DMA 2270.

It will be evident that the invention is not limited to the modulation/demodulation method shown for the further signal component FS. For example, it is possible to use interpolation techniques as described, for example, in the Article "Interpolation and Decimation of Digital Signals - A Tutorial Review" by R.E. Crochiere and L.R. Rabiner, published in Proceedings of the IEEE, Vo. 69, no. 3, March 1981, pp 300-331 to realize frequency transpositions of the further signal component from the baseband to a range around a central frequency $f_{SC}$, and conversely. It is alternatively possible to differentially encode the further signal component FS at the transmitter end so that a demodulation in the receiver can be dispensed with and the $f_{SC}$-modulated FS component can be decoded directly, as is known, for example, from European Patent Application 66,338.

It is also to be noted that the increase of the channel capacity with respect to that of the known D2-MAC TV signal, which is obtained with the further signal component FS, can be used for the transmission of additional sound and/or data information which, if suppressed or perturbed as a result of a transmission through a narrow-band channel (of, for example, 5.5 MHz), does not give rise to a perturbation of the processing and/or display of the other, correctly transmitted picture, sound and data information.

## Claims

1. A TV broadcasting system for the transmission of a time-division multiplex television signal discrete lines of which successively comprise first, second and third sections incorporating a digital sound/data component having a bit rate of 10.125 Mbit/sec, a time-compressed chrominance component and a time-compressed luminance component, respectively, characterized by a further signal component which is incorporated in the first section and which constitutes, together with the digital sound/data component, a frequency-division multiplex signal having a basebandwidth which is at most equal to the channel basebandwidth of the TV broadcasting system.

A TV broadcasting system as claimed in Claim 1, characterized in that the further signal component is amplitude-modulated with a suppressed carrier at a subcarrier frequency which at most corresponds to the highest frequency within the channel baseband of the TV broadcasting system, the transmission characteristic of the TV broadcasting system having a low-pass Nyquist edge at said subcarrier frequency.

3. A TV broadcasting system as claimed in Claim 1 or 2, characterized in that the subcarrier frequency is in a fixed ratio to the clock frequency of the digital sound/data component.

4. A TV broadcasting system as claimed in any one of the preceding Claims, characterized in that the further signal component comprises digital information.

5. A transmitter for use in a TV broadcasting system as claimed in any one of the preceding Claims, characterized by a modulator and filtering device to which the information of the further signal component and a modulation frequency derived from the clock frequency of the sound/data component are applied for an amplitude modulation with a suppressed carrier of the said information at said subcarrier.

6. A TV receiver for use in a TV broadcasting system as claimed in any one of the preceding Claims, characterized by a frequency-division demultiplexing device for frequency-division demultiplexing in sound/data component and the further signal component incorporated in the first section of the time-division multiplex television signal.

7. A TV receiver as claimed in Claim 6, characterized by a subcarrier frequency regeneration device to which the clock frequency of the sound/data component is applied for deriving a local subcarrier frequency therefrom and which is coupled to the said frequency-division demultiplexing device.

8. A TV receiver as claimed in Claim 6 or 7, comprising a time-division demultiplexing device for time-division demultiplexing the components of the said sections, characterized by a low-pass Nyquist filter preceding said time-division demultiplexing device and having a Nyquist point which is located at the said subcarrier frequency.

FIG.1

FIG.2

FIG.3

FIG.4

ean Patent

Application Number

EP 88 20 2742

| | | Relevant to claim | CLASSIFICATION OF THE APPLICATION (Int. Cl.4) |
|---|---|---|---|
| **CUMENTS CONSIDERED TO BE RELEVANT** | | | |
| Citation of document with indication, where appropriate, of relevant passages | | | H 04 N 7/00 |
| P-A-0 211 758 (ETAT FRANCAIS ELEDIFFUSION DE FRANCE) * Page 4, line 3 - page 11, line 13 * --- | | 1,5,6 | |
| RUNDFUNKTECHNISCHE MITTEILUNGEN, vol. 29, no. 5, September/October, pages 229-246, Norderstedt, DE; V.C. DOSCH: "D- und D2-MAC/PAKET - die Mitglieder der MAC-Fernsehstandardfamilie mit geschlossener Basisbanddarstellung" * Whole article * ----- | | 1,5,6 | |
| | | | **TECHNICAL FIELDS SEARCHED (Int. Cl.4)** |
| | | | H 04 N |

The present search report has been drawn up for all claims

| Place of search | Date of completion of the search | Examiner |
|---|---|---|
| THE HAGUE | 22-02-1989 | VERSCHELDEN J. |

CATEGORY OF CITED DOCUMENTS

X : particularly relevant if taken alone
Y : particularly relevant if combined with another document of the same category
technological background
disclosure

T : theory or principle underlying the invention
E : earlier patent document, but published on, or after the filing date
D : document cited in the application
L : document cited for other reasons

& : member of the same patent family, corresponding document

1503 03.82 (P0401)